# EUROPÄISCHE PATENTSCHRIFT

(11) **EP 3 105 156 B1**
(45) Veröffentlichungstag und Bekanntmachung des Hinweises auf die Patenterteilung: **24.10.2018**
(21) Anmeldenummer: 15702229.4
(22) Anmeldetag: 29.01.2015
(51) Int. Cl.: B65G 47/90, B25J 15/02

(54) **GREIFKOPF ZUR UMSETZUNG VON GEGENSTÄNDEN**
GRIPPING HEAD FOR RELOCATING OBJECTS
TÊTE DE PRÉHENSION POUR DÉPLACER DES OBJETS

(30) Priorität: 13.02.2014 DE 102014101791
(43) Veröffentlichungstag der Anmeldung: 21.12.2016
(73) Patentinhaber: KHS GmbH, 44143 Dortmund (DE)
(72) Erfinder: HELFRICH, Stefan, 64646 Heppenheim (DE); RÜBSAAMEN, Martin, 67098 Bad Dürkheim (DE)
(86) Internationale Anmeldenummer: PCT/EP2015/051866
(87) Internationale Veröffentlichungsnummer: WO 2015/121078

(56) Entgegenhaltungen:
- FR-A1- 2 407 133
- US-A- 4 852 928
- US-B1- 8 172 292

## Beschreibung

Die Erfindung betrifft einen Greifkopf zur Umsetzung von Gegenständen, wie bspw. Flüssigkeitsgebinde von Getränkebehältnissen (Dosen, Flaschen, etc.), Kästen, Schachteln und dergleichen, der einen mit einem mit einer Antriebseinheit, insbesondere Robotereinheit verbindbaren Grundträger, sowie mindestens zwei im Abstand zueinander verstellbar an dem Grundträger angeordneten Greifern, mit jeweils einer mit den Gegenstand in Wirkverbindung bringbaren Klemmbacke.

Greifköpfe der eingangs genannten Art sind in vielfältigen Ausgestaltungen aus dem Stand der Technik bekannt. Sie dienen in Transportsystemen z.B. der Getränkeindustrie dazu, gruppierte Gegenstände, bspw. Gebinde von Flaschen, Dosen oder dergleichen, an einer Abnahmeposition aufzunehmen und an eine Abgabeposition oder -station zu überführen, ggf. auch in bereitstehende Kartonagen, Kisten oder dergleichen einzustellen. Eine Positionierung des Greifkopfs erfolgt dabei üblicherweise über eine mit den Greifköpfen verbindbare Antriebseinheit, insbesondere eine Robotereinheit, über welche eine vollautomatische Bewegungssteuerung des Greifkopfs erfolgen kann.

Zum Ergreifen der Gegenstände weist der Greifkopf mindestens zwei Greifer auf, die ebenfalls über die mit dem Greifkopf verbindbare Antriebseinheit oder aber über einen separaten Stellantrieb in ihrem Abstand zueinander verstellbar sind, so dass die Klemmbacken in Anlage an die zu erfassenden Gegenstände gebracht werden können und dann klemmend in dem Greifkopf gehalten werden.

Aus der US 8,172,292 B1 ist ein Greifkopf gemäß dem Oberbegriff des Anspruchs 1 bekannt, der feststehende, äußere Anschlagbleche und vertikal verfahrbare Klemmfinger aufweist, mit welchen ein vertikal aufragender, freier Rand eines Verpackungskartons gegen das äußere, feste Anschlagbleche eingeklemmt werden kann, um derart die Verpackung anheben und umsetzten zu können.

Weiterhin offenbart US 4,852,928 A einen Greifkopf, der am unteren Greiferende ein photo-elektrischen Sensor aufweist und mit einer Auswerteinheit in Verbindung steht, um derart den idealen Angriffspunkt an einem Stückgut zu identifizieren.

Derartige Greifköpfe weisen jedoch den Nachteil auf, dass diese zur Vermeidung von Beschädigungen an dem Greifkopf oder an den zu manipulierenden oder transportierenden Gegenständen durch bspw. Sensor- oder Kamerasysteme überwacht werden müssen, da bspw. bei einer Fehlpositionierung der umzusetzenden Gegenstände oder bei einem umgestürzten Gegenstände aus der an der Übernahmeposition angeordneten Gegenstandsgruppe andernfalls die Gefahr besteht, dass der Greifkopf bei einer Absenkbewegung mit einer Gegenstandsecke oder einem umgestürzten Gegenstand kollidiert, wodurch es zu einer Störung und Beschädigung des Greifkopfs kommen kann, in deren Folge wirtschaftlich nachteilige Stillstandszeiten auftreten.

Der Erfindung liegt die Aufgabe zugrunde einen Greifkopf zur Umsetzung von Gegenständen, insbesondere von gruppierten Flüssigkeitsgebinden, bereit zu stellen, welcher bei Hindernissen im Bewegungsbereich einen Schutz vor Beschädigungen aufweist.

Die Erfindung löst die Aufgabe durch einen Greifkopf mit den Merkmalen des Anspruchs 1. Vorteilhafte Weiterbildungen sind in den abhängigen Ansprüchen angegeben.

Kennzeichnend für den erfindungsgemäßen Greifkopf ist, dass die zur Erfassung der Gegenstände verwendeten Klemmbacken der Greifer jeweils an einem Klemmbackenträger angeordnet sind, welcher in Richtung auf den Grundträger, ausgehend von einer Normallage, verschiebbar an einem Haltekörper angeordnet ist.

Durch die Verschiebbarkeit der Klemmbackenträger in Richtung auf den Grundträger, besteht die Möglichkeit, dass diese bei einer Schwenk- oder Hubbewegung des Greifkopfs, in der Regel einer durch die Antriebseinheit, insbesondere eine Robotereinheit, initiierten Verfahrbewegung in Richtung auf die aufzunehmenden Gegenstände ausweichen können, so dass im Falle eines Hindernisses im Bewegungsbereich des Greifkopfs eine Beschädigung des Greifkopfs verhindert wird. Die Ausgleichsbewegung erfolgt dabei in Richtung auf den Grundträger entgegen der zur Aufnahme der Gegenstand erfolgenden Absenkbewegung des Greifkopfs. Im störungsfreien Betrieb verbleiben die Klemmbackenträger mit ihren Klemmbacken in der Normallage, welche der Position der Klemmbacken entspricht, die diese in einem störungsfreien Regelbetrieb des Greifkopfes einnehmen.

Die Ausgestaltung der Verschiebbarkeit des Klemmbackenträgers gegenüber dem Grundträger kann grundsätzlich in beliebiger Weise erfolgen. Neben der Richtung der Verschiebbarkeit kann dabei auch das zur Verfügung stehende Maß der Verschiebbarkeit durch eine geeignete konstruktive Ausgestaltung frei gewählt werden.

Erfindungsgemäß ist vorgesehen, dass die Klemmbackenträger aus der Normallage in eine Zwischenlage und/oder eine Endlage verschiebbar sind. Die Endlage bestimmt dabei die maximale Verschiebbarkeit des Klemmbackenträgers gegenüber dem Grundträger. Die Endlage kann bspw. durch einen einstellbaren Anschlagkörper an dem Grundträger festgelegt werden, an welchem der Klemmbackenträger in der Endlage zur Anlage kommt. Erfindungsgemäß ist die Verbindung von Klemmbackenträger und Haltekörper auch derart ausgestaltet, dass der Klemmbackenträger nur bis in eine von der Endlage abweichenden Zwischenlage oder zunächst in eine Zwischenlage und dann in eine Endlage verschiebbar ist. Die Festlegung einer Zwischenlage ermöglicht es zum Beispiel, die Verschiebbarkeit mehrstufig auszugestalten, so dass unterschiedlichen Belastungssituationen bei einem Kontakt des Greifers mit einem Hindernis mit einer sich stufenweise verändernden Bewegungscharakteristik begegnet werden kann.

Grundsätzlich besteht die Möglichkeit, die Verschiebbarkeit des Klemmbackenträgers gegenüber dem Grundträger derart auszugestalten, dass bei einer Kollision eines Greifers mit einem aufzunehmenden Gegenstand in jedem Fall ein ausreichender Aushebeweg zur Verfügung steht, so dass der Greifer vor Beschädigung geschützt ist. Dies kann dadurch erreicht werden, dass der zur Verfügung stehende Aushebeweg des Klemmbackenträgers größer ist als die maximal zu erwartende Absenkbewegung des Greifkopfs nach einer Kollision mit einem Hindernis.

Ein vertikaler mechanischer oder motorischer Antrieb der Klemmbacken oder Klemmbackenträger relativ zu dem Grundträger ist idealerweise nicht vorgesehen.

Nach einer besonders vorteilhaften Ausgestaltung der Erfindung ist jedoch vorgesehen, dass die Klemmbackenträger in der Zwischenlage und/oder der Endlage mit einer die Antriebseinheit deaktivierenden Steuereinheit in Wirkverbindung gelangen. Gemäß dieser Ausgestaltung deaktivieren die Klemmbackenträger in der zuvor festgelegten Zwischenlage und/oder der Endlage die den Greifkopf gegenüber dem Hindernis verstellende Antriebseinheit. Hierzu ist der Klemmbackenträger derart ausgestaltet, dass er in der Zwischenlage und/oder Endlage mit der Steuereinheit in Wirkverbindung gelangt, welche bei ihrer Aktivierung eine Abschaltung der Antriebseinheit bewirkt, so dass eine eine Beschädigung des Greifkopfs oder der aufzunehmenden Gegenstände bewirkende Weiterbewegung des Greifkopfs unterbunden wird. Durch diese Ausgestaltung der Erfindung kann in besonderer Weise eine Beschädigung des Greifkopfs oder der bewegungshindernden Gegenstände vermieden werden. Die Festlegung der Zwischenlage und/oder der Endlage kann dabei entsprechend der Vorgabe konstruktiv frei gewählt werden.

Zur Lageerfassung des Klemmbackenträgers in der Zwischen- und/oder Endlage kann die Steuereinheit in beliebiger Weise ausgestaltet sein. Nach einer besonders vorteilhaften Ausgestaltung der Erfindung ist jedoch vorgesehen, dass die Steuereinheit optisch und/oder mechanisch wirkende Mittel zur Erfassung der Zwischen- und/oder Endlage der Klemmbackenträger aufweist. Als optisch wirkendes Mittel kann die Steuereinheit bspw. eine Lichtschranke aufweisen, welche bei Erreichen der Zwischenlage oder Endlage unterbrochen wird, so dass die Steuereinheit die Antriebseinheit deaktiviert. Als mechanisch wirkende Mittel können bspw. einfache Schalter verwendet werden. Die Betätigung dieser Mittel kann dabei unmittelbar über Bauteile der Klemmbackenträger erfolgen. Darüber hinaus können jedoch an den Klemmbackenträgern auch zusätzliche Betätigungsmittel angeordnet werden, so dass zur Anordnung der Steuereinheit ein größerer Spielraum zur Verfügung steht.

Die Festlegung der Zwischen- und/oder Endlage gegenüber der Normallage kann bereits durch die konstruktive Ausgestaltung des Greifkopfs einmalig festgelegt werden. Nach einer vorteilhaften Ausgestaltung der Erfindung ist jedoch vorgesehen, dass die Position der Zwischenlage und/oder der Endlage gegenüber der Normallage einstellbar ist. Die Einstellbarkeit der Zwischen- und/oder Endlage ermöglicht es, den Greifkopf in einfacher Weise an unterschiedliche Einsatzbedingungen anzupassen. Diese können bspw. aus der Verwendung des Greifkopfs zur Aufnahme unterschiedlicher Gegenstände resultieren, welche eine höhere oder geringere Verstellbarkeit des Klemmbackenträgers gegenüber dem Grundträger erforderlich machen, um einer Beschädigung des Greifers und/oder der Gegenstände vorzubeugen.

Nach einer besonders vorteilhaften Ausgestaltung der Erfindung ist dabei vorgesehen, dass an dem Klemmbackenträger ein einen optisch oder mechanisch wirkenden Sensor der Steuereinheit auslösendes Steuerelement angeordnet ist, wobei das Steuerelement in seiner Position gegenüber den Klemmbackenträger einstellbar ist und/oder ein mit dem Sensor in Wirkverbindung befindliches und in seiner Längserstreckung veränderbares Steuerelement, bspw. eine Schaltfahne, eine Langloch oder dergleichen aufweist. In einer besonders einfachen Ausgestaltung der Erfindung ist gemäß dieser Weiterbildung vorgesehen, dass an dem Klemmbackenträger ein Steuerelement, bspw. ein Bestätigungsstab angeordnet ist, welcher in seiner Position gegenüber dem Klemmbackenträger einstellbar ist, so dass hierdurch in einfacher Weise festlegbar ist, nach welchem Verstellweg des Klemmbackenträgers durch das Steuerelement der optisch oder mechanisch wirkende Sensor der Steuereinheit betätigt wird. Im Falle der Verwendung eines optisch wirkenden Sensors kann dabei das Steuerelement eine Lichtschranke unterbrechen. Im Falle eines mechanisch wirkenden Sensors kann durch das Steuerelement ein entsprechendes Schaltelement betätigt werden.

Gemäß einer weiteren Ausgestaltung der Erfindung kann das Steuerelement auch derart ausgestaltet sein, dass es eine Aussparung, ein Langloch oder dergleichen aufweist, welches sich in seiner Längserstreckung mit dem Sensor in Eingriff befindet und bei Erreichen einer Endposition des Langlochs den Sensor der Steuereinheit betätigt. Über die Einstellbarkeit der Längserstreckung des Langlochs kann dabei festgelegt werden, welchen Betrag die Verschiebung des Klemmbackenträgers gegenüber dem Grundträger aufweisen muss, damit die Steuereinheit betätigt wird, bspw. durch das Ende des Langlochs eine das Langloch durchstrahlende Lichtschranke unterbrochen wird.

Nach einer weiteren Ausgestaltung der Erfindung ist vorgesehen, dass der Greifer eine den Klemmbackenträger gegenüber dem Haltekörper in Richtung auf die Normallage vorspannende Ausgleichseinheit aufweist. Die Ausgleichseinheit gewährleistet aufgrund ihrer vorspannenden Eigenschaft zunächst, dass der Klemmbackenträger im Regelbetrieb des Greifers zuverlässig in der Normallage angeordnet ist, wobei dabei der Klemmbackenträger gegenüber dem Haltekörper über eine Vorspannung abgestützt ist. Die Ausgleichseinheit gewährleistet weiterhin im Falle einer Anordnung eines Hindernisses im Bewegungsbereich des Greifers eine entgegen der Vorspannung gerichtete Ausweichbewegung des Klemmbackenträgers gegenüber dem Grundträger, so dass Beschädigungen an dem Greifer sowie an den Gegenständen weiterhin vermieden werden können. Darüber hinaus gewährleistet die Vorspannung, dass der Klemmbackenträger nach einer Ausgleichsbewegung im anschließenden Regelbetrieb des Greifers wieder selbsttätig in die Normallage zurückgeführt wird. Die Ausgleichsbewegung reduziert darüber hinaus einen Verschleiß der Klemmbacken für den Fall, dass die Klemmbacken bereits bei einer Aufwärts- oder Abwärtsbewegung des Greifers an den Gegenständen zur Anlage kommen.

Die Festlegung der Funktion bei Erreichen der Zwischenlage des Klemmbackenträgers ist grundsätzlich frei wählbar. Eine gemäß vorstehender Weiterbildung der Erfindung Ausführungsbeispiel vorgesehene Betätigung einer Steuereinheit zur Deaktivierung der Antriebseinheit stellt dabei eine mögliche Funktion dar. Nach einer weiteren Ausgestaltung der Erfindung gelangt die Ausgleichseinheit nach dem Verlassen der Zwischenlage mit dem Klemmbackenträger außer Eingriff.

Erfindungsgemäß ist vorgesehen, dass der Klemmbackenträger ausgehend von der Normallage über die Zwischenlage hinaus gegenüber dem Haltekörper verschiebbar ist. Bei Erreichen der Zwischenlage erfolgt eine Entkopplung der Ausgleichseinheit von dem Klemmbackenträger, so dass dieser dann über die Zwischenlage hinaus unbelastet durch eine Vorspannung der Ausgleichseinheit bis in die Endlage verschoben werden kann. Diese Ausgestaltung der Erfindung ermöglicht die Verwendung der Ausgleichseinheit auch für den Fall, die durch die Ausgleichseinheit bereitgestellte Ausgleichsbewegung nicht ausreichend ist, um im Falle der Anordnung eines Hindernisses einer Beschädigung des Greifers vorzubeugen. Im Regelbetrieb können somit die Vorteile der Ausgleichseinheit genutzt werden, zu denen neben einer zuverlässigen Anordnung des Klemmbackenträgers in der Normallage auch eine Reduzierung des Verschleißes der Klemmbacken zählt, welcher aufgrund einer schleifenden Bewegung der Gegenstände an den Klemmbacken resultieren kann, wenn die Klemmbacken bei einer Verstellbewegung des Greifers bereits an den Gegenstände n anliegen. Ferner wird durch diese Ausgestaltung auch einer Beschädigung der Ausgleichseinheit vorgebeugt.

Die Ausgestaltung der Ausgleichseinheit ist grundsätzlich frei wählbar. So können zur Erzeugung der Vorspannung bspw. elastisch wirkende Dämpfungselemente verwendet werden, welche in geeigneter Weise im Bewegungsbereich zwischen dem Klemmbackenträger und dem Haltekörper angeordnet sind. Gemäß einer besonders vorteilhaften Ausgestaltung der Erfindung ist dabei vorgesehen, dass die Vorspannung der Ausgleichseinheit einstellbar ist. Die Einstellbarkeit bezieht sich dabei sowohl auf die Vorspannkraft sowie auf den im Rahmen der Ausgleichseinheit zur Verfügung stehenden Verstellweg. Die Einstellbarkeit ermöglicht dabei eine einfache Anpassung des Greifers an sich verändernde Einsatzbedingungen.

Gemäß einer besonders vorteilhaften Ausgestaltung der Erfindung weist die Ausgleichseinheit ein Führungselement und ein Haltekörperteil auf, die über einen Bolzen relativ zueinander verschiebbar verbunden sind. Koaxial zum Bolzen erstreckt sich eine an gegenüberliegenden Flächen des Führungselements und des Haltekörperteils anliegende Schraubendruckfeder. Gemäß dieser Ausgestaltung der Erfindung weist die Ausgleichseinheit ein mit dem Klemmbackenträger verbindbares Führungselement und ein mit dem Haltekörper verbindbares Haltekörperteil auf. Eine Bewegung des Klemmbackenträgers gegenüber dem Haltekörper bewirkt somit eine entsprechende Verstellung des Führungselements gegenüber dem Haltekörperteil. Zur Ausrichtung des Führungselements gegenüber dem Haltekörperteil sind diese dabei über einen Bolzen verbunden, der die Richtung der Verschiebbarkeit von Führungselement und Haltekörperteil zueinander festlegt.

In der Einbaulage der Ausgleichseinheit erstreckt sich der Bolzen dabei in Bewegungsrichtung des Klemmbackenträgers gegenüber dem Haltekörper. Koaxial zum Bolzen, dessen Längsachse die Bewegungsrichtung des Führungselements gegenüber dem Haltekörperteil bestimmt, ist eine Schraubendruckfeder vorgesehen, welche mit ihren gegenüberliegenden Enden an gegenüberliegenden Flächen des Führungselements und des Haltekörperteils anliegt. Die Schraubendruckfeder spannt in der Einbaulage der Ausgleichseinheit damit den Klemmbackenträger in Richtung auf die Normallage vor, wobei über die Ausgestaltung der Schraubendruckfeder die Vorspannkraft sowie Verstellmöglichkeit der Ausgleichseinheit festlegbar ist.

Besonders vorteilhafter Weise ist dabei vorgesehen, dass der Abstand der gegenüberliegenden Flächen des Führungselements und des Haltekörperteils einstellbar ist, wobei hierzu mindestens eine auf den Bolzen aufschraubbare Mutter vorgesehen ist, über deren Aufschraublänge der Abstand zwischen Führungselement und Haltekörperteil festgelegt werden kann.

Ein Ausführungsbeispiel der Erfindung wird nachstehend mit Bezug auf die Zeichnungen erläutert. In den Zeichnungen zeigen:
- Fig. 1: eine erste perspektivische Ansicht eines Greifkopfs mit einem in einer Endlage angeordneten Klemmbackenträger und einem in einer Normallage angeordneten Klemmbackenträger;
- Fig. 2: eine zweite perspektivische Ansicht des Greifkopfs von Fig. 1 in der in Fig. 1 dargestellten Position und
- Fig. 3: eine perspektivische Darstellung einer Ausgleichseinheit des Greifkopfs von Fig. 1.

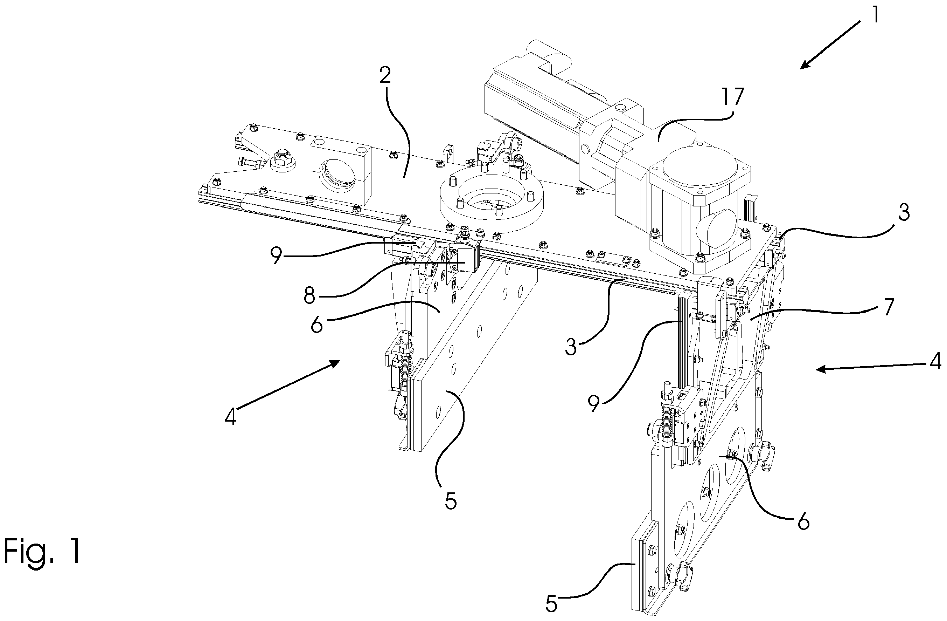

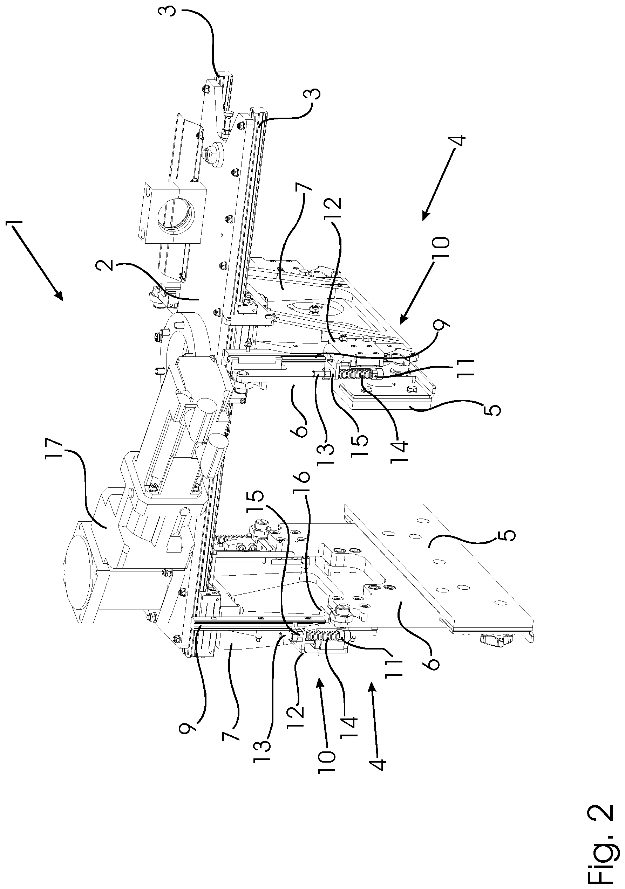

In Fig. 1 und Fig. 2 ist ein Greifkopf 1 zur Erfassung von hier nicht dargestellten, Gegenständen (Flüssigkeitsgebinden) dargestellt.

Zur Anbindung des Greifkopfs 1 an eine hier nicht dargestellte Antriebseinheit, bspw. eine Robotereinheit, welche zum Verfahren des Greifkopfs 1 dient, weist dieser einen Grundträger 2 auf. An dem Grundträger 2 sind neben geeigneten Anschlussmitteln zur Anbindung des Greifkopfs 1 an die Robotereinheit oder Antriebseinheit ferner zwei Schienen 3 im Abstand voneinander angeordnet. Die Schienen 3 dienen zur Aufnahme der Greifer 4, die mittels eines Stellantriebs 17, welcher ebenfalls an dem Grundträger 2 befestigt ist, zueinander verstell- und verfahrbar sind.

Zur Erfassung der Gegenstände wird der Greifkopf 1 durch die Antriebseinheit in eine vorbestimmte Übernahmeposition bewegt. In der Übernahmeposition werden die Greifer 4 durch den Stellantrieb 17 aufeinander zu bewegt, wodurch die zu erfassenden Gegenstände zwischen den Klemmbacken 5 der Greifer 4 klemmend gehalten werden. Nach der Aufnahme der Gegenstände kann dann der Greifkopf 1 zu einer Abgabestation oder -position geführt werden, an welche die Gebinde durch Öffnen des Greifkopfs 1 in Kartonagen, Kisten oder dergleichen eingestellt oder nur in gewünschter Ausrichtung zur Lagenbildung bewegt und abgestellt werden können.

Die Klemmbacken 5 der entlang der Schienen 3 verstellbaren Greifer 4 sind an Klemmbackenträger 6 angeordnet. Diese sind jeweils in Richtung auf den Grundträger 2 vertikal verschiebbar an den Schienen 9 eines Haltekörpers 6 gelagert, der wiederum an den Schienen 3 des Grundträgers 2 verschiebbar gelagert ist. Zur verschieblichen Lagerung des Klemmbackenträgers 6 an den senkrechten Schienen 9 der Haltekörper 7, weist der Klemmbackenträger 6 zwei im Abstand voneinander angeordnete Schienenaufnahmen 16 auf, innerhalb derer die an dem Haltekörper 7 angeordneten Schienen 9 gelagert sind. Über die Schienenaufnahme 16 und die Schiene 9 ist eine Verlagerung des Klemmbackenträgers 6 aus der für einen Greifer 4 in Fig. 1 und 2 dargestellten tiefen Normallage in die für den anderen Greifer 4 ebenfalls in Fig. 1 und 2 dargestellten obere End- oder Ausweichlage möglich. Die Verlagerbarkeit ermöglicht somit eine Ausweichbewegung der Klemmbacken 5 und des Klemmbackenträgers 6 für den Fall, dass im Bewegungsbereich des Greifkopfs 1 ein Hindernis, bspw. eine fehlpositionierte Gebindegruppe oder ein einzelnes Gebinde angeordnet ist.

Im Bereich zwischen der Normallage und einer hier nicht dargestellten Zwischenlage befindet sich der Klemmbackenträger 6 in Wirkverbindung mit einer an dem Haltekörper 7 angeordneten Ausgleichseinheit 10.

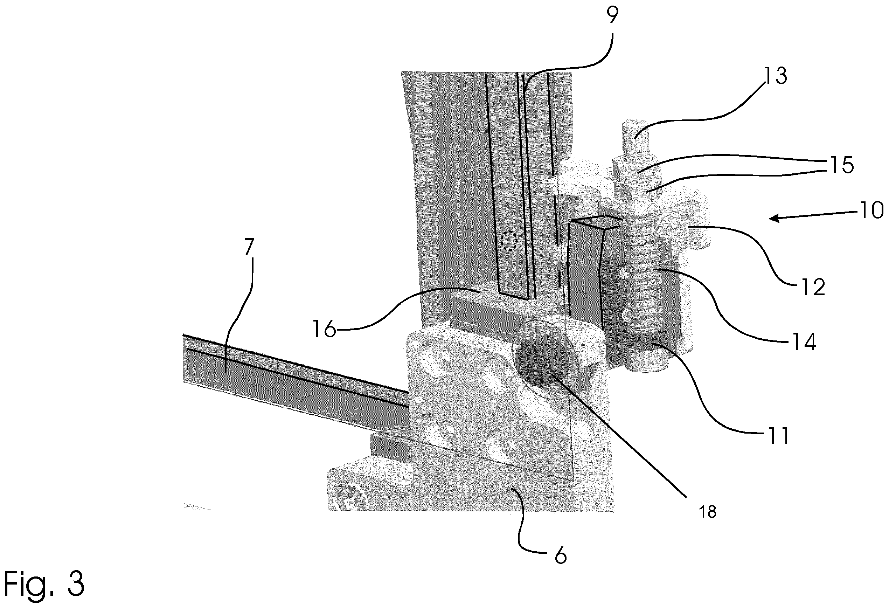

Die in Fig. 3 in einer vergrößerten Darstellung wiedergegebene Ausgleichseinheit 10 weist ein Haltekörperteil 12 sowie ein Führungselement 11 auf. In der Normallage befindet sich das Führungselement 11 mit dem Klemmbackenträger 6 in Wirkverbindung, so dass eine Verstellung des Klemmbackenträgers 6 in Richtung auf den Grundträger 2 ebenfalls eine Verlagerung des Führungselements 11 in Richtung auf ein mit dem Haltekörper 7 verbundenes Haltekörperteil 12 bewirkt. Die Bewegung erfolgt dabei entlang eines Haltekörperteil 12 und Führungselement 11 verbindenden Bolzens 13.

Die Wirkverbindung zwischen Klemmbackenträger 6 und Führungselement 11 ist vorliegend als federbelastete und in der Aufnahme 18 angeordneten Arretierungskugel ausgeführt, die in einer entsprechenden Aussparung oder Vertiefung (nicht dargestellt) im Führungselementes 11 eingerastet ist.

Die Verstellbewegung des Führungselements 11 erfolgt dabei entgegen einer durch ein Feder- oder Druckelement, hier eine Schraubendruckfeder 14, hervorgerufene Vorspannung, wobei die Schraubendruckfeder 14 an gegenüberliegenden Flächen des Führungselements 11 und des Haltekörperteils 12 anliegt. Die Höhe der durch die Schraubendruckfeder 14 hervorgerufene Vorspannung ist dabei über zwei den Abstand zwischen dem Führungselement 11 und dem Haltekörperteil 12 festlegende, auf den Bolzen 13 aufschraubbare Muttern 15 einstellbar.

Die Wirkverbindung zwischen dem Klemmbackenträger 6 und dem Führungselement 11 ist dabei derart ausgestaltet, dass die Arretierungskugel nach Erreichen einer aus der tiefen Normalposition erhöhten (hier nicht dargestellten) Zwischenlage aufgelöst wird, in dem die Arretierungskugel aus der komplementären Aussparung oder Vertiefung spring, so dass der Klemmbackenträger 6 dann unbeeinflusst durch das Ausgleichselement 10 bis in die in Fig. 1 und Fig. 2 dargestellte Endlage eines Greifers 4 geführt werden kann und das Führungselement 11 durch die Schraubendruckfeder 14 wieder in die tiefe Ausgangsposition verfahren wird.

### Bezugszeichenliste

- 1: Greifkopf
- 2: Grundträger
- 3: Schiene
- 4: Greifer
- 5: Klemmbacke
- 6: Klemmbackenträger
- 7: Haltekörper
- 8: Sensor
- 9: Schiene
- 10: Ausgleichseinheit
- 11: Führungselement
- 12: Haltekörperteil
- 13: Bolzen
- 14: Schraubendruckfeder
- 15: Mutter
- 16: Schienenaufnahme
- 17: Stellantrieb
- 18: Aufnahme

## Patentansprüche

1. Greifkopf zur Umsetzung von Gegenständen, insbesondere von gruppierten Getränkebehältnissen, Verpackungseinheiten, Kisten oder Kartons, mit
- einem mit einer Antriebseinheit, insbesondere Robotereinheit verbindbaren Grundträger (2) und
- zwei im Abstand zueinander verstellbar an dem Grundträger (2) angeordneten Greifern (4) mit jeweils einer mit den Gegenständen in Wirkverbindung bringbaren Klemmbacke (5), wobei
die Greifer (4) jeweils einen mit der Klemmbacke (5) verbundenen Klemmbackenträger (6) aufweisen, der aus einer Normallage in Richtung auf den Grundträger (2) verschiebbar an einem mit dem Grundträger (2) verbundenen Haltekörper (7) gelagert ist,
**dadurch gekennzeichnet, dass** der Greifer (4) eine den Klemmbackenträger (6) gegenüber dem Haltekörper (7) in Richtung auf die Normallage vorspannende Ausgleichseinheit (10) aufweist, wobei
die Klemmbackenträger (6) aus der Normallage in eine Zwischenlage und/oder eine Endlage verschiebbar sind, und wobei
die Ausgleichseinheit (10) in der Zwischenlage mit dem Klemmbackenträger (6) außer Eingriff gelangen kann, indem beim Erreichen der Zwischenlage eine Entkopplung der Ausgleichseinheit von dem Klemmbackenträger erfolgt, so dass dieser dann über die Zwischenlage hinaus unbelastet durch eine Vorspannung der Ausgleichseinheit bis in die Endlage verschoben werden kann.

2. Greifkopf nach Anspruch 1, **dadurch gekennzeichnet, dass** die Klemmbackenträger (6) in der Zwischenlage und/oder der Endlage mit einer die Antriebseinheit deaktivierenden Steuereinheit in Wirkverbindung befindlich ist.

3. Greifkopf nach einem der vorherigen Ansprüche, **dadurch gekennzeichnet, dass** die Steuereinheit optisch und/oder mechanisch wirkende Mittel zur Erfassung der Zwischenlage und/oder der Endlage der Klemmbackenträger (6) aufweist.

4. Greifkopf nach einem der vorherigen Ansprüche, **dadurch gekennzeichnet, dass** die Position der Zwischenlage und/oder der Endlage gegenüber der Normallage einstellbar ist.

5. Greifkopf nach einem der vorheriger Ansprüche, **dadurch gekennzeichnet, dass** an dem Klemmbackenträger (6) ein einen optisch oder mechanisch wirkenden Sensor (8) der Steuereinheit auslösendes Steuerelement angeordnet ist, das in seiner Position gegenüber dem Klemmbackenträger (6) einstellbar ist und/oder ein mit dem Sensor (8) in Wirkverbindung befindliches und in seiner Längserstreckung veränderbares Langloch aufweist.

6. Greifkopf nach einem der vorherigen Ansprüche, **dadurch gekennzeichnet, dass** die Vorspannung der Ausgleichseinheit (10) einstellbar ist.

7. Greifkopf nach einem der vorherigen Ansprüche, **dadurch gekennzeichnet, dass** die Ausgleichseinheit (10) ein Führungselement (11) und ein Haltekörperteil (12) aufweist, die über einen Bolzen (13) relativ zueinander verschiebbar verbunden sind, wobei koaxial zum Bolzen (13) eine an gegenüberliegenden Flächen des Führungselements (11) und des Halterkörperteils (12) anliegende Schraubendruckfeder (14) angeordnet ist.

8. Greifkopf nach einem der vorherigen Ansprüche, **dadurch gekennzeichnet, dass** ein die Vorspannung durch die Schraubendruckfeder (14) bewirkender Abstand der gegenüberliegenden Flächen des Führungselements (11) und des Haltekörperteils (12) einstellbar ist.

## Claims

1. Gripping head for relocating objects, in particular of grouped drinks containers, packing units, crates or boxes, with
- a base support (2) which can be connected to a drive unit, in particular a robot unit, and
- two gripping means (4) that can be adjusted in terms of their distance in relation to one another, arranged on the base support (2) with in each case a clamping jaw (5) which can be brought into operative connection with the objects, wherein
- the gripping means (4) in each case comprise a clamping jaw support (6) connected to the clamping jaw (5), which can be moved out of a normal position in the direction towards the base support (2), mounted on a holding body (7) connected to the base support (2),
**characterised in that** the gripping means (4) comprise a compensation unit (10), which subjects the clamping jaw support (6) to preliminary tension in relation to the holding body (7) in the direction towards the normal position, wherein
the clamping jaw support (6) can be moved out of the normal position into an intermediate position and/or an end position, and wherein
the compensation unit (10) in the intermediate position can move out of engagement with the clamping jaw support (6), **in that**, on reaching the intermediate position, a decoupling takes place of the compensation unit from the clamping jaw support, such that the clamping jaw support can then be moved beyond the intermediate position, without any loading imposed, due to the preliminary tension applied by the compensation unit, as far as into the end position.

2. Gripping head according to claim 1, **characterised in that** the clamping jaw support (6) in the intermediate position and/or the end position is in operative connection with a control unit which deactivates the drive unit.

3. Gripping head according to any one of the preceding claims, **characterised in that** the control unit comprises optical and/or mechanically effective means for determining the intermediate position and/or the end position of the clamping jaw support (6).

4. Gripping head according to any one of the preceding claims, **characterised in that** the position of the intermediate position and/or the end position can be adjusted in relation to the normal position.

5. Gripping head according to any one of the preceding claims, **characterised in that** a control element is arranged at the clamping jaw support (6), which actuates an optically or mechanically effective sensor (8) of the control unit, which is adjustable in its position in relation to the clamping jaw support (6) and/or exhibits a longitudinal hole which is in operative connection with the sensor (8) and can be changed in its longitudinal extension.

6. Gripping head according to any one of the preceding claims, **characterised in that** the preliminary tension of the compensation unit (10) is adjustable.

7. Gripping head according to any one of the preceding claims, **characterised in that** the compensation unit (10) comprises a guide element (11) and a holding body part (12), which are connected to one another by means of a bolt (13) such as to be displaceable relative to one another, wherein a helical pressure spring (14) is arranged coaxially to the bolt (13) and is in contact on opposite surfaces of the guide element (11) and of the holding body (12).

8. Gripping head according to any one of the preceding claims, **characterised in that** a distance interval between the opposite surfaces of the guide element (11) and of the holding body part (12), which incurs the preliminary tension due to the helical pressure spring (14), is adjustable.

## Revendications

1. Tête de préhension servant à transférer des objets, en particulier des contenants de boisson groupés, des unités d'emballage, des caisses ou des cartons, avec
- un support de base (2) pouvant être relié à une unité d'entraînement, en particulier à une unité de robot, et
- deux grappins (4) disposés à distance l'un de l'autre de manière ajustable au niveau du support de base (2), avec respectivement une mâchoire de serrage (5) pouvant être amenée en liaison fonctionnelle avec les objets, dans laquelle
les grappins (4) présentent respectivement un support de mâchoire de serrage (6) relié à la mâchoire de serrage (5), qui est monté au niveau d'un corps de maintien (7) relié au support de base (2) de manière à pouvoir être coulissé depuis une position normale en direction du support de base (2),
**caractérisée en ce que** le grappin (4) présente une unité de compensation (10) précontraignant le support de mâchoire de serrage (6) par rapport au corps de maintien (7) en direction de la position normale, dans laquelle
les supports de mâchoire de serrage (6) peuvent être coulissés depuis la position normale dans une position intermédiaire et/ou une position finale, et dans laquelle
l'unité de compensation (10) peut se désengager du support de mâchoire de serrage (6) dans la position intermédiaire **en ce que** lorsque la position intermédiaire est atteinte, un découplage de l'unité de compensation et du support de mâchoire de serrage a lieu de sorte que celui-ci puisse être coulissé alors au-delà de la position intermédiaire jusque dans la position finale sans contrainte exercée par une précontrainte de l'unité de compensation.

2. Tête de préhension selon la revendication 1, **caractérisée en ce que** les supports de mâchoire de serrage (6) se trouvent en liaison fonctionnelle dans la position intermédiaire et/ou dans la position finale avec une unité de commande désactivant l'unité d'entraînement.

3. Tête de préhension selon l'une quelconque des revendications précédentes, **caractérisée en ce que** l'unité de commande présente des moyens ayant une action optique et/ou mécanique servant à détecter la position intermédiaire et/ou la position finale des supports de mâchoire de serrage (6).

4. Tête de préhension selon l'une quelconque des revendications précédentes, **caractérisée en ce que** le positionnement de la position intermédiaire et/ou de la position finale par rapport à la position normale peut être réglé.

5. Tête de préhension selon l'une quelconque des revendications précédentes, **caractérisée en ce qu'**est disposé au niveau du support de mâchoire de serrage (6) un élément de commande déclenchant un capteur (8), ayant une action optique ou mécanique, de l'unité de commande, dont la position par rapport au support de mâchoire de serrage (6) peut être réglée et/ou qui présente un trou oblong se trouvant en liaison fonctionnelle avec le capteur (8) et présentant une extension longitudinale variable.

6. Tête de préhension selon l'une quelconque des revendications précédentes, **caractérisée en ce que** la précontrainte de l'unité de compensation (10) peut être réglée.

7. Tête de préhension selon l'une quelconque des revendications précédentes, **caractérisée en ce que** l'unité de compensation (10) présente un élément de guidage (11) et une partie de corps de maintien (12), qui sont reliés de manière à pouvoir coulisser l'un par rapport à l'autre par l'intermédiaire d'un boulon (13), dans laquelle un ressort de pression hélicoïdal (14) reposant au niveau de surfaces opposées de l'élément de guidage (11) et de la partie de corps de maintien (12) est disposé de manière coaxiale par rapport au boulon (13).

8. Tête de préhension selon l'une quelconque des revendications précédentes, **caractérisée en ce qu'**une distance entraînant la précontrainte exercée par le ressort de pression hélicoïdal (14) entre les surfaces opposées de l'élément de guidage (11) et de la partie de corps de maintien (12) peut être réglée.
